# EUROPEAN PATENT APPLICATION

(11) **EP 4 213 535 A1**
(43) Date of publication of application: **19.07.2023**
(21) Application number: 21865854.0
(22) Date of filing: 23.08.2021
(51) Int. Cl.: H04W 28/24

(54) **QOS CONTROL METHOD AND DEVICE, AND PROCESSOR-READABLE STORAGE MEDIUM**

(30) Priority: 10.09.2020 CN 202010948232
(71) Applicant: Datang Mobile Communications Equipment Co., Ltd., Beijing 100085 (CN)
(72) Inventor: DENG, Qiang, Beijing 100085 (CN); HOU, Yunjing, Beijing 100085 (CN)
(74) Representative: dompatent von Kreisler Selting Werner - Partnerschaft von Patent- und Rechtsanwälten mbB
(86) International application number: PCT/CN2021/114073
(87) International publication number: WO 2022/052798

(57) **Abstract**

Embodiments of the present disclosure provide a QoS control method, apparatus, and processor-readable storage medium, where the method includes: receiving, by a Relay UE, a PCS QoS parameter and a packet filter determined by a Remote UE, or receiving, by the Relay UE, a Uu QoS parameter and a Uu QoS Rule determined by a Relay UE SMF; and determining a target QoS parameter and a target packet filter, according to the PCS QoS parameter and the packet filter, or according to the Uu QoS parameter and the Uu QoS Rule.

## Description

### CROSS REFERENCE OF RELATED APPLICATION

The present application claims a priority of Chinese patent application No. 202010948232.5 filed on September 10, 2020, which is incorporated herein by reference in its entirety.

### TECHNICAL FIELD

Embodiments of the present disclosure relate to the field of communication technology, and in particular to a QoS control method, an apparatus, and a processor-readable storage medium.

### BACKGROUND

Research and standardization of Proximity Services (ProSe) in the fifth generation communication technology (5th generation, 5G) system are performed by the 3rd Generation Partnership Project (3GPP). An important scenario in ProSe is that a remote UE communicates with the network through a relay UE to obtain related services. The Remote UE may access the network through the user plane connection provided by the Protocol Data Unit (PDU) session and Quality of Service (QoS) flow of the Relay UE, thereby establishing the Remote UE's own PDU session and QoS flow. A remaining problem in the standards of related technologies is how to control the QoS flow of the Relay UE to meet the QoS requirements of the QoS flow of the Remote UE.

### SUMMARY

The purpose of the embodiments of the present disclosure is to provide a QoS control method, an apparatus and a processor-readable storage medium, which can solve the problem on how to control the QoS flow of the Relay UE to meet the QoS requirement of the QoS flow of the Remote UE.

In order to solve the above-mentioned technical problems, the present disclosure is implemented as follows:

In a first aspect, an embodiment of the present disclosure provides a QoS control method, which is performed by a Remote UE, where the method includes:
determining a PC5 QoS parameter and a packet filter; and
transmitting the PC5 QoS parameter and the packet filter to the Relay UE.

In some embodiments, the transmitting the PC5 QoS parameter and the packet filter to the Relay UE includes:
transmitting a first request message for establishing a new PC5 QoS flow to the Relay UE, where the first request message includes the PC5 QoS parameter and the packet filter.

In some embodiments, the determining PC5 QoS parameter includes:
determining the PC5 QoS parameter according to a QoS parameter received from N3IWF and a mapping relationship between a Uu QoS parameter and the PC5 QoS parameter.

In some embodiments, the method further includes:
receiving first QoS policy information from a policy control function (PCF), where the first QoS policy information includes the mapping relationship between the Uu QoS parameter and the PC5 QoS parameter.

In some embodiments, the packet filter includes a N3IWF IP address and a SPI, wherein the SPI is acquired by the Relay UE from the N3IWF.

In some embodiments, the method further includes:
mapping, according to the packet filter, an uplink data packet to a PC5 QoS flow.

In a second aspect, an embodiment of the present disclosure provides a QoS control method, performed by a Relay UE SMF, where the method includes:
determining a Uu QoS parameter and a Uu QoS Rule; and
transmitting the Uu QoS parameter and the Uu QoS Rule to the Relay UE.

In some embodiments, the transmitting the Uu QoS parameter and the Uu QoS Rule to the Relay UE includes:
transmitting a protocol data unit (PDU) session request message to the Relay UE, where the PDU session request message includes the Uu QoS parameter and the Uu QoS Rule.

In some embodiments, the determining the Uu QoS parameter includes:
receiving a first target QoS parameter from the Relay UE, where the first target QoS parameter is determined by the Relay UE;
determining the Uu QoS parameter according to the first target QoS parameter.

In some embodiments, the determining the Uu QoS Rule includes:
receiving a first target packet filter from the Relay UE, where the first target packet filter is determined by the Relay UE; and
determining the Uu QoS Rule according to the first target packet filter, where the Uu QoS Rule includes a QoS flow identifier (QFI) and the first target packet filter.

In some embodiments, the determining the Uu QoS parameter includes:
determining the Uu QoS parameter according to a mapping relationship between a Differentiated Services Code Point (DSCP) and a QoS parameter and a DSCP value in a downlink IP packet transmitted by Non-3GPP InterWorking Function (N3IWF).

In some embodiments, the determining the Uu QoS Rule includes:
determining the Uu QoS Rule according to a QFI and a packet filter, where the packet filter includes a N3IWF IP address and a SPI, or the packet filter includes the N3IWF IP address and the DSCP.

In some embodiments, the method further includes:
transmitting the first target packet filter to a Relay UE user plane function (UPF), so that the Relay UE UPF maps a downlink IP packet to a corresponding QoS flow according to the first target packet filter.

In a third aspect, an embodiment of the present disclosure provides a QoS control method, performed by a Relay UE, and the method includes:
receiving a PC5 QoS parameter and a packet filter from a Remote UE, or receiving a Uu QoS parameter and a Uu QoS Rule from a relay UE session management function (SMF); and
determining a target QoS parameter and a target packet filter according to the PC5 QoS parameter and the packet filter, or according to the Uu QoS parameter and the Uu QoS Rule.

In some embodiments, the receiving the PC5 QoS parameter and the packet filter from the Remote UE includes:
receiving a first request message for establishing a new PC5 QoS flow from the Remote UE, where the first request message includes the PC5 QoS parameter and the packet filter.

In some embodiments, the packet filter includes a N3IWF IP address and a SPI.

In some embodiments, the target QoS parameter is a Uu QoS parameter;
the determining the target QoS parameter, according to the PC5 QoS parameter includes:
determining the target QoS parameter according to the PC5 QoS parameter and a mapping relationship between the PC5 QoS parameter and the Uu QoS parameter.

In some embodiments, where the packet filter is a Uu packet filter;
the determining the target packet filter, according to the packet filter includes:
determining whether to accept the Uu packet filter according to a second QoS policy information.

In some embodiments, the method further includes:
receiving the second QoS policy information from a policy control function (PCF), where the second QoS policy information includes the allowed mapping relationship between the PC5 QoS parameter and the Uu QoS parameter and an allowed N3IWF address.

In some embodiments, the method further includes:
transmitting a PDU session request message to the Relay UE SMF, where the PDU session request message includes the target QoS parameter and the target packet filter.

In some embodiments, the receiving the Uu QoS parameter and the Uu QoS Rule from the Relay UE SMF includes:
receiving a PDU session request message from the Relay UE SMF, where the PDU session request message includes the Uu QoS parameter and the Uu QoS Rule.

In some embodiments, where the Uu QoS Rule includes a QoS flow identifier (QFI) and the packet filter, the packet filter includes a N3IWF IP address and a SPI, or the packet filter includes the N3IWF IP address and a DSCP.

In some embodiments, where the target QoS parameter is the PC5 QoS parameter;
the determining the target QoS parameter, according to the Uu QoS parameter includes:
determining the target QoS parameter, according to the Uu QoS parameter and the mapping relationship between the Uu QoS parameter and the PC5 QoS parameter.

In some embodiments, where the target packet filter is a PC5 packet filter;
the determining the target packet filter, according to the Uu QoS Rule includes:
determining the target packet filter according to the packet filter in the Uu QoS Rule.

In some embodiments, the method further includes:
mapping, according to the target packet filter, a downlink data packet to a PC5 QoS flow.

In some embodiments, the method further includes:
transmitting a link modification request message to the Remote UE, where the link modification request message includes the target QoS parameter and the target packet filter.

In a fourth aspect, an embodiment of the present disclosure provides a QoS control apparatus, applied to a Remote UE, including: a first memory, a first transceiver, and a first processor:
where the first memory is used for storing program; the first transceiver is used for sending and receiving data under the control of the first processor; and the first processor is used for reading the program in the first memory and performing the following operations of:
determining a PC5 QoS parameter and a packet filter;
transmitting the PC5 QoS parameter and the packet filter to a Relay UE.

In some embodiments, where the first processor is specifically used for:
transmitting a first request message for establishing a new PC5 QoS flow to the Relay UE, where the first request message includes the PC5 QoS parameter and the packet filter.

In some embodiments, where the first processor is specifically used for:
determining the PC5 QoS parameter according to a QoS parameter received from Non-3GPP InterWorking Function (N3IWF) and a mapping relationship between a Uu interface quality of service (Uu QoS) parameter and the PC5 QoS parameter.

In some embodiments, where the first processor is further used for:
receiving first QoS policy information from a policy control function (PCF), where the first QoS policy information includes the mapping relationship between the Uu QoS parameter and the PC5 QoS parameter.

In some embodiments, the packet filter includes a N3IWF IP address and a SPI, where the SPI is acquired by the Relay UE from the N3IWF.

In some embodiments, where the first processor is further used for:
mapping, according to the packet filter, an uplink data packet to a PC5 QoS flow.

In a fifth aspect, an embodiment of the present disclosure provides a QoS control apparatus, applied to a Relay UE SMF, including: a second memory, a second transceiver, and a second processor:
where the second memory is used for storing program; the second transceiver is used for sending and receiving data under the control of the second processor; the second processor is used for reading the program in the second memory and performing the following operations of:
determining a Uu QoS parameter and a Uu QoS Rule; and
transmitting the Uu QoS parameter and the Uu QoS Rule to the Relay UE.

In some embodiments, the second processor is specifically used for:
transmitting a protocol data unit (PDU) session request message to the Relay UE, where the PDU session request message includes the Uu QoS parameter and the Uu QoS Rule.

In some embodiments, the second processor is specifically used for:
receiving a first target QoS parameter from the Relay UE, where the first target QoS parameter is determined by the Relay UE; and
determining the Uu QoS parameter according to the first target QoS parameter.

In some embodiments, the second processor is specifically used for:
receiving a first target packet filter from the Relay UE, where the first target packet filter is determined by the Relay UE; and
determining the Uu QoS Rule according to the first target packet filter, where the Uu QoS Rule includes a QoS flow identifier (QFI) and the first target packet filter.

In some embodiments, the second processor is specifically used for:
determining the Uu QoS parameter according to a mapping relationship between a Differentiated Services Code Point (DSCP) and a QoS parameter and a DSCP value in a downlink IP packet transmitted by Non-3GPP InterWorking Function (N3IWF).

In some embodiments, the second processor is specifically used for:
determining the Uu QoS Rule according to a QFI and a packet filter, where the packet filter includes a N3IWF IP address and a SPI, or the packet filter includes the N3IWF IP address and the DSCP.

In some embodiments, the second processor is further used for:
transmitting the first target packet filter to a Relay UE user plane function (UPF), so that the Relay UE UPF maps a downlink IP packet to a corresponding QoS flow according to the first target packet filter.

In a sixth aspect, an embodiment of the present disclosure provides a QoS control apparatus, applied to a Relay UE, including: a third memory, a third transceiver, and a third processor:
where the third memory is used for storing program; the third transceiver is used for sending and receiving data under the control of the third processor; and the third processor is used for reading the program in the third memory and performing the following operations of:
receiving a PC5 QoS parameter and a packet filter from a Remote UE, or receiving a Uu QoS parameter and a Uu QoS Rule from a relay UE session management function (SMF); and
determining a target QoS parameter and a target packet filter according to the PC5 QoS parameter and the packet filter, or according to the Uu QoS parameter and the Uu QoS Rule.

In some embodiments, the third processor is specifically used for:
receiving a first request message for establishing a new PC5 QoS flow from the Remote UE, where the first request message includes the PC5 QoS parameter and the packet filter.

In some embodiments, the packet filter includes a N3IWF IP address and a SPI.

In some embodiments, the target QoS parameter is a Uu QoS parameter; and
the third processor is specifically used for:
determining the target QoS parameter according to the PC5 QoS parameter and a mapping relationship between the PC5 QoS parameter and the Uu QoS parameter.

In some embodiments, the packet filter is a Uu packet filter;
the third processor is specifically used for:
determining whether to accept the Uu packet filter according to a second QoS policy information.

In some embodiments, the third processor is further used for:
receiving the second QoS policy information from a policy control function (PCF), where the second QoS policy information includes the allowed mapping relationship between the PC5 QoS parameter and the Uu QoS parameter and an allowed N3IWF address.

In some embodiments, the third processor is further used for:
transmitting a PDU session request message to the Relay UE SMF, where the PDU session request message includes the target QoS parameter and the target packet filter.

In some embodiments, the third processor is specifically used for:
receiving a PDU session request message from the Relay UE SMF, where the PDU session request message includes the Uu QoS parameter and the Uu QoS Rule.

In some embodiments, the Uu QoS Rule includes a QoS flow identifier (QFI) and the packet filter, the packet filter includes a N3IWF IP address and a SPI, or the packet filter includes the N3IWF IP address and a DSCP.

In some embodiments, the target QoS parameter is the PC5 QoS parameter;
the third processor is specifically used for:
determining the target QoS parameter, according to the Uu QoS parameter and the mapping relationship between the Uu QoS parameter and the PC5 QoS parameter.

In some embodiments, the target packet filter is a PC5 packet filter;
the third processor is specifically used for:
determining the target packet filter according to the packet filter in the Uu QoS Rule.

In some embodiments, the third processor is further used for:
mapping, according to the target packet filter, a downlink data packet to a PC5 QoS flow.

In some embodiments, the third processor is further used for:
transmitting a link modification request message to the Remote UE, where the link modification request message includes the target QoS parameter and the target packet filter.

In a seventh aspect, an embodiment of the present disclosure provides a QoS control apparatus, applied to a Remote UE, including:
a first determining unit, configured to determine a PC5 QoS parameter and a packet filter (packet filter); and
a first transmitting unit, configured to transmit the PC5 QoS parameter and the packet filter to the Relay UE.

In some embodiments, the first transmitting unit is specifically used for:
transmitting a first request message for establishing a new PC5 QoS flow to the Relay UE, where the first request message includes the PC5 QoS parameter and the packet filter.

In some embodiments, the first determining unit is specifically used for:
determining the PC5 QoS parameter according to the QoS parameter received from the N3IWF and the mapping relationship between the Uu QoS parameter and the PC5 QoS parameter.

In some embodiments, the apparatus also includes:
a second receiving unit, configured to receive first QoS policy information from the PCF, where the first QoS policy information includes a mapping relationship between the Uu QoS parameter and the PC5 QoS parameter.

In some embodiments, the packet filter includes an N3IWF IP address and an SPI, where the SPI is acquired by the Relay UE from the N3IWF.

In some embodiments, the apparatus also includes:
a first mapping unit, configured to map, according to the packet filter, the uplink data packet to the PC5 QoS flow.

In an eighth aspect, the embodiment of the present disclosure provides a QoS control apparatus, applied to a Relay UE SMF, including:
a second determining unit, configured to determine a Uu QoS parameter and a Uu QoS Rule; and
a second transmitting unit, configured to transmit the Uu QoS parameter and the Uu QoS Rule to the Relay UE.

In some embodiments, the second transmitting unit is specifically used for:
transmitting a PDU session request message to the Relay UE, where the PDU session request message includes the Uu QoS parameter and the Uu QoS Rule.

In some embodiments, the second determining unit is specifically configured to:
receive a first target QoS parameter from the Relay UE, where the first target QoS parameter is determined by the Relay UE; and
determine the Uu QoS parameter according to the first target QoS parameter.

In some embodiments, the second determining unit is specifically configured to:
receive a first target packet filter from the Relay UE, where the first target packet filter is determined by the Relay UE;
determine the Uu QoS Rule according to the first target packet filter, where the Uu QoS Rule includes QFI and the first target packet filter.

In some embodiments, the second determining unit is specifically configured to:
determine the Uu QoS parameter according to the mapping relationship between DSCP and QoS parameter and the DSCP value in the downlink IP packet transmitted by the N3IWF.

In some embodiments, the second determining unit is specifically configured to:
determine the Uu QoS Rule according to the QFI and packet filter, where the packet filter includes the N3IWF IP address and SPI, or the packet filter includes the N3IWF IP address and DSCP.

In some embodiments, the apparatus also includes:
a third transmitting unit, configured to transmit the first target packet filter to the Relay UE UPF, so that the Relay UE UPF maps the downlink IP packet to a corresponding QoS flow according to the first target packet filter.

In the ninth aspect, the embodiment of the present disclosure provides a QoS control apparatus, applied to a Relay UE, including:
a first receiving unit, configured to receive a PC5 QoS parameter and a packet filter from a Remote UE, or receive a Uu QoS parameter and a Uu QoS Rule from a Relay UE SMF; and
a third determining unit, configured to determine a target QoS parameter and a target packet filter according to the PC5 QoS parameter and the packet filter, or according to the Uu QoS parameter and the Uu QoS Rule.

In some embodiments, the first receiving unit is specifically configured to:
receive a first request message for establishing a new PC5 QoS flow from the Remote UE, where the first request message includes the PC5 QoS parameter and the packet filter.

In some embodiments, the packet filter includes N3IWF IP address and SPI.

In some embodiments, the target QoS parameter is a Uu QoS parameter;
the third determining unit is specifically used for:
determining the target QoS parameter according to the PC5 QoS parameter and the mapping relationship between the PC5 QoS parameter and the Uu QoS parameter.

In some embodiments, the packet filter is a Uu packet filter;
the third determining unit is specifically used for:
determining whether to accept the Uu packet filter according to the second QoS policy information.

In some embodiments, the apparatus also includes:
a third receiving unit, configured to receive second QoS policy information from the PCF, where the second QoS policy information includes the allowed mapping relationship between the PC5 QoS parameter and the Uu QoS parameter and allowed N3IWF address.

In some embodiments, the apparatus also includes:
a fourth transmitting unit, configured to transmit a PDU session request message to the Relay UE SMF, where the PDU session request message includes the target QoS parameter and the target packet filter.

In some embodiments, the first receiving unit is specifically configured to:
receive a PDU session request message from the Relay UE SMF, where the PDU session request message includes the Uu QoS parameter and the Uu QoS Rule.

In some embodiments, the Uu QoS Rule includes QFI and packet filter, and the packet filter includes N3IWF IP address and SPI, or the packet filter includes N3IWF IP address and DSCP.

In some embodiments, the target QoS parameter is a PC5 QoS parameter;
the third determining unit is specifically configured to:
determine the target QoS parameter according to the Uu QoS parameter and the mapping relationship between the Uu QoS parameter and the PC5 QoS parameter.

In some embodiments, the target packet filter is PC5 packet filter;
the third determining unit is specifically configured to:
determine the target packet filter according to the packet filter in the Uu QoS Rule.

In some embodiments, the apparatus also includes:
a second mapping unit, configured to map the downlink data packet to the PC5 QoS flow according to the target packet filter.

In some embodiments, the apparatus also includes:
a fifth transmitting unit, configured to transmit a link modification request message to the Remote UE, where the link modification request message includes the target QoS parameter and the target packet filter.

In a tenth aspect, an embodiment of the present disclosure provides a processor-readable storage medium, where the processor-readable storage medium stores a program, and the program is used for enabling the processor to execute the QoS control method described in the first aspect, or, execute the QoS control method described in the second aspect, or execute the QoS control method described in the third aspect.

In the embodiment of the present disclosure, the QoS flow establishment process initiated by the Remote UE or the Relay UE SMF is used to establish the PC5 QoS flow between the Remote UE and the Relay UE and the QoS flow between the Relay UE and the Relay UE UPF to meet the QoS requirements of the QoS flow between the Remote UE and the Remote UE UPF.

### BRIEF DESCRIPTION OF THE DRAWINGS

FIG.1a is a schematic view of a 5G ProSe UE-to-Network Relay architecture;
FIG. 1b is a schematic view of a N3IWF-based UE-to-Network Relay architecture;
FIG. 1c is a schematic view of a connection establishment process of the N3IWF-based UE-to-Network Relay architecture;
FIG. 1d is a schematic view of a N3IWF-based UE-to-Network Relay user plane protocol stack;
FIG. 2 is a first flowchart of a QoS control method provided by an embodiment of the present disclosure;
FIG. 3 is a second flowchart of the QoS control method provided by an embodiment of the present disclosure;
FIG. 4 is a third flowchart of the QoS control method provided by an embodiment of the present disclosure;
FIG. 5a is a fourth flowchart of the QoS control method provided by an embodiment of the present disclosure;
FIG. 5b is the fifth flowchart of the QoS control method provided by an embodiment of the present disclosure;
FIG. 5c is the sixth flowchart of the QoS control method provided by an embodiment of the present disclosure;
FIG. 6 is a first schematic structural view of a QoS control apparatus provided by an embodiment of the present disclosure;
FIG. 7 is a second schematic structural view of the QoS control apparatus provided by an embodiment of the present disclosure; and
FIG. 8 is a third schematic structural view of the QoS control apparatus provided by an embodiment of the present disclosure.

### DETAILED DESCRIPTION

The following will clearly and completely describe the technical solutions in the embodiments of the present disclosure with reference to the drawings in the embodiments of the present disclosure, obviously, the described embodiments are part of the embodiments of the present disclosure, not all of embodiments. Based on the embodiments in the present disclosure, all other embodiments obtained by those ordinarily skilled in the art without making creative efforts belong to the protection scope of the present disclosure.

The terms "first", "second" and the like in the specification and claims of the present disclosure are used to distinguish similar objects, and are not used to describe a specific order or sequence. It should be understood that the data so used are interchangeable under appropriate circumstances, such that the embodiments of the present disclosure can be implemented in sequences other than those illustrated or described herein, and the objects distinguished by "first", "second" and so on are generally one type, and the number of objects is not limited, for example, there may be one first object, or there may be multiple objects. In addition, "and/or" in the specification and claims means at least one of the connected objects, and the character "/" generally means that the related objects are an "or" relationship.

The QoS control method provided by the embodiments of the present disclosure will be described in detail below through specific embodiments and application scenarios with reference to the drawings.

The technology described herein is not limited to the fifth-generation mobile communication (5th-generation, 5G) system and subsequent evolution communication system, and is not limited to the LTE/LTE evolution (LTE-Advanced, LTE-A) system, and can also be used in various wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), Single-carrier Frequency-Division Multiple Access (Single-carrier Frequency-Division Multiple Access, SC-FDMA) and other systems.

The terms "system" and "network" are generally used interchangeably. A CDMA system may implement radio technologies such as CDMA2000, Universal Terrestrial Radio Access (UTRA). UTRA includes Wideband CDMA (Wideband Code Division Multiple Access, WCDMA) and other CDMA variants. A TDMA system can implement a radio technology such as Global System for Mobile Communication (GSM). OFDMA system can implement Ultra Mobile Broadband (Ultra Mobile Broadband, UMB), Evolution-UTRA ((Evolution-UTRA, E-UTRA)), IEEE 802.11 ((Wi-Fi)), IEEE 802.16 ((WiMAX)), IEEE 802.20, Flash-OFDM and other radio technologies. UTRA and E-UTRA are parts of the Universal Mobile Telecommunications System (UMTS). LTE and LTE-Advanced (like LTE-A) are new UMTS versions that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies.

In order to better understand the schemes of the embodiments in the present disclosure, the following content is first described:

### (1) 5G ProSe UE-to-Network Relay infrastructure

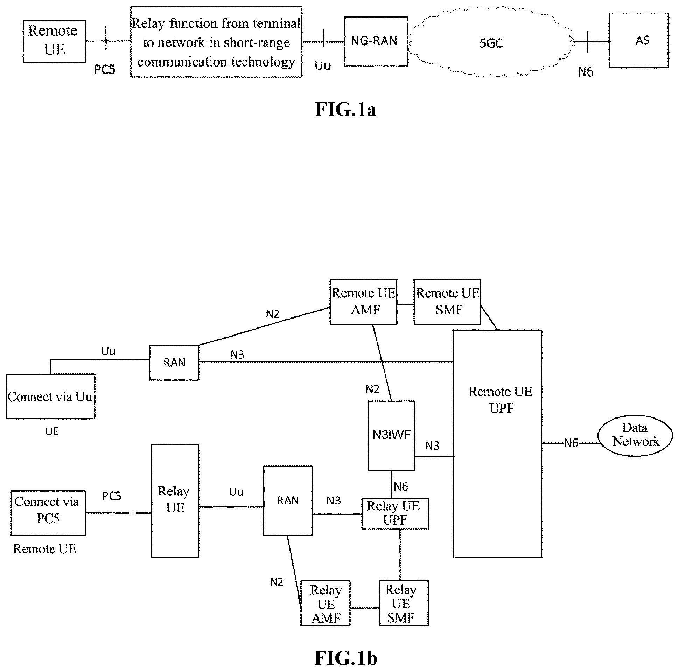

FIG.1a shows the 5G ProSe UE-to-Network Relay infrastructure. When the UE is out of network coverage or the signal quality of the Uu interface is relatively poor, UE cannot directly be connected to the network, but UE with a relay function can be connected to the network. The former is called as Remote UE, and the latter is called as Relay UE. The Relay UE is registered in the network, and establishes a protocol data unit (Protocol Data Unit, PDU) session and QoS flow to realize communication with the network. The Remote UE communicates with the Relay UE through the PC5 interface (the communication interface between UEs), and forwards data through the PDU session and QoS flow of the Relay UE to achieve the purpose of communicating with the network.

### (2) UE-to-Network Relay architecture based on N3IWF

On the basis of the UE-to-Network Relay infrastructure shown in FIG. 1a, in order to ensure end-to-end security, a UE-to-Network Relay architecture based on non-3GPP InterWorking Function (Non-3GPP InterWorking Function, N3IWF) is also proposed in the research of 5G ProSe subject.

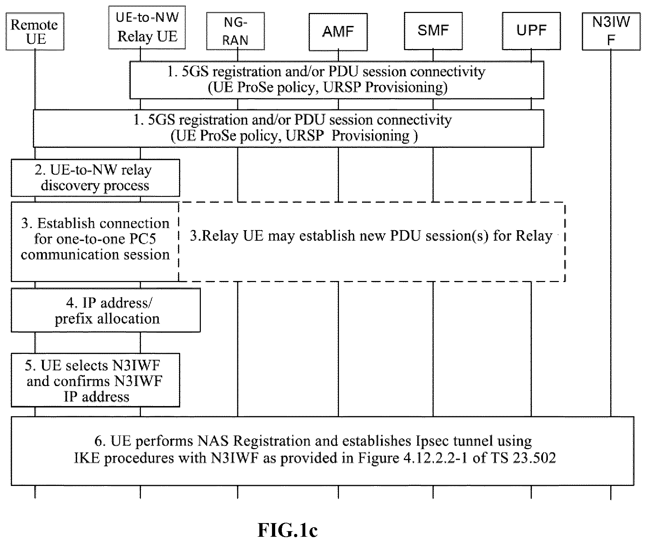

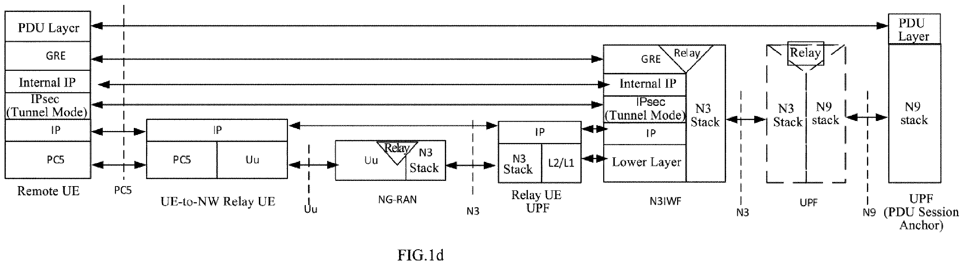

Figure 1b shows the UE-to-Network Relay architecture based on N3WIF. In this architecture, the Relay UE is still registered in the network, and establishes a PDU session and QoS flow to realize communication with the network. The difference from FIG. 1 is that the PDU session of the Relay UE needs to support the connection to the N3IWF. The Remote UE establishes an IPSec connection with the N3IWF through the PDU session of the Relay UE, and the Remote UE transmits NAS signaling messages and user plane data to the network through the IPSec connection.

### (3) The connection establishment process of UE-to-Network Relay architecture based on N3IWF

As shown in FIG. 1c, the specific process is as follows:
1. The Remote UE and the Relay UE initiate a registration procedure and obtain ProSe policy and URSP policy information from the network, where the policy information indicates whether the Remote UE accesses the 5GC through the N3IWF.
2. The Remote UE executes the discovery process to discover the UE-to-Network Relay.
3. The Remote UE selects the UE-to-Network Relay and establishes direct one-to-one communication. The communication interface between the Remote UE and the Relay UE is the PC5 interface. If a new PDU session needs to be created, UE-to-Network Relay initiates a new PDU session establishment process.
4. The UE-to-Network Relay assigns an IP address to the Remote UE.
5. The Remote UE selects the N3IWF and determines the N3IWF IP address.
6. The Remote UE uses the IKE procedure to establish an IPSec connection with the N3IWF, and initiates a non-access stratum (Non-access stratum, NAS) registration procedure. After the IPSec connection is established, the Remote UE can establish a PDU session and QoS flow with the network through NAS messages.

In the N3IWF-based UE-to-Network Relay architecture, the Remote UE establishes a PDU session and QoS flow with the network through NAS messages, and the PDU session and QoS flow are carried on the PDU session and QoS flow of the Relay UE. As shown in FIG. 1d, the transmission of the PDU transmitted between the Remote UE and the Remote UE UPF between the Remote UE and the N3IWF is carried on the PC5 connection (and PC5 Qos flow) between the Remote UE and the Relay UE and the PDU session (and Uu Qos flow) between the Relay UE and the Relay UE UPF, so as to meet the QoS requirements (such as delay, bit rate, etc.) of the QoS flow between Remote UE and Remote UE UPF, the PC5 QoS flow and Uu QoS flow of the Relay UE must also meet the corresponding QoS requirements.

Related technologies have not yet resolved how to control the PC5 QoS flow between the Remote UE and the Relay UE and the QoS flow between the Relay UE and the Relay UE UPF, so as to meet the QoS requirements of the QoS flow between the Remote UE and the Remote UE UPF.

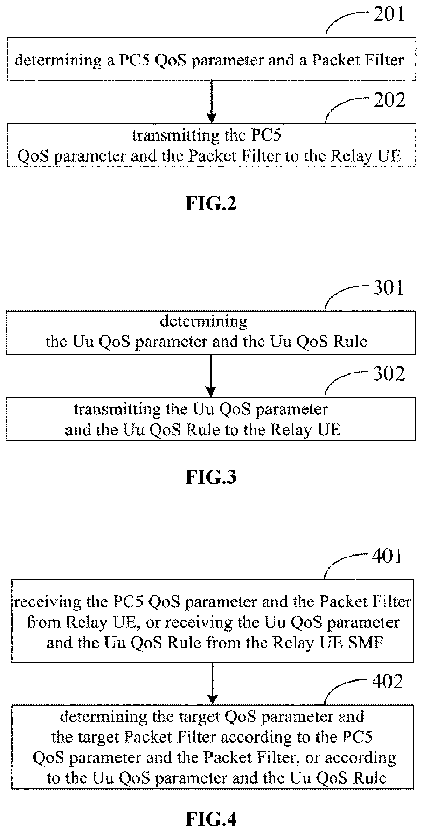

Referring to FIG. 2, an embodiment of the present disclosure provides a QoS control method, which is applied to a Remote UE, and the method includes:
Step 201: determining a PC5 QoS parameter and a packet filter;
Step 202: transmitting the PC5 QoS parameter and the packet filter to the Relay UE.

In the embodiment of the present disclosure, the Remote UE initiates the QoS establishment process, specifically, the Remote UE determines the PC5 interface quality of service (PC5 QoS) parameter and packet filter (packet filter), and transmits the determined PC5 QoS parameter and the packet filter to the Relay UE, so that the Relay UE can determine the target QoS parameter and the target packet filter according to the PC5 QoS parameter and the packet filter, and complete the establishment of the PC5 QoS flow between the Remote UE and the Relay UE and the QoS flow between the Relay UE and the Relay UE UPF, which meets the QoS requirements of the QoS flow between the Remote UE and the Remote UE UPF.

In some embodiments, the aforementioned packet filter includes a Non-3GPP InterWorking Function (Non-3GPP InterWorking Function, N3IWF) IP address and a Security Parameter Index (Security Parameter Index, SPI), where the SPI is acquired by the Relay UE from the N3IWF.

Further, the method further includes: mapping, according to the packet filter, an uplink data packet to the PC5 QoS flow.

It is understandable that the above-mentioned packet filter can also be called as Relay UE packet filter; simultaneously, optionally, the Remote UE can also determine the Remote UE PC5 QoS rule (Rule), and Uu interface quality of service (Uu QoS) parameter, the Uu QoS parameter can also be called as the Relay UE QoS parameter.

In some embodiments, the above-mentioned transmitting the PC5 QoS parameter and packet filter to the Relay UE specifically includes: transmitting a first request message for establishing a new PC5 QoS flow to the Relay UE, the first request message includes the PC5 QoS parameter and packet filter. Optionally, the first request message may be called as a link modification request (Link Modification Request) message, and the PC5 QoS parameter and the packet filter are carried in the message.

In some embodiments, the above-mentioned determining the PC5 QoS parameter specifically includes: determining the PC5 QoS parameter according to the QoS parameter received from the N3IWF and a mapping relationship between the Uu QoS parameter and the PC5 QoS parameter.

In the embodiment of the present disclosure, the N3IWF transmits the Uu QoS parameter to the Remote UE in advance. Specifically, the N3IWF may transmit the Uu QoS parameter to the Remote UE through a PDU session establishment acceptance message, where the message may also include a QoS Rule.

Further, the method further includes: receiving first QoS policy information from a Policy Control Function (Policy Control Function, PCF), where the first QoS policy information includes a mapping relationship between the Uu QoS parameter and the PC5 QoS parameter.

In the embodiment of the present disclosure, the mapping relationship between the Uu QoS parameter and the PC5 QoS parameter is acquired by the Remote UE receiving the first QoS policy information from the PCF. In some embodiments, the Remote UE may receive the first QoS policy information from the PCF through access control and mobility management function (Access Control And Mobility Management Function, AMF).

In the embodiment of the present disclosure, after the Remote UE determines the PC5 QoS parameter and packet filter, the determined PC5 QoS parameter and packet filter are sent to the Relay UE, and the PC5 QoS flow between the Remote UE and the Relay UE and QoS flow between the Relay UE and the Relay UE UPF are established, so as to meet the QoS requirements of the QoS flow between the Remote UE and the Remote UE UPF.

Referring to FIG. 3, an embodiment of the present disclosure provides a QoS control method, which is applied to a Relay UE session management function (Session Management Function, SMF), where the method includes:
Step 301: determining the Uu QoS parameter and the Uu QoS Rule;
Step 302: transmitting the Uu QoS parameter and the Uu QoS Rule to the Relay UE.

In the embodiment of the present disclosure, the transmitting the Uu QoS parameter and the Uu QoS Rule to the Relay UE specifically includes: transmitting a PDU session request message to the Relay UE, where the PDU session request message includes the Uu QoS parameter and the Uu QoS Rule.

The above-mentioned determining the Uu QoS parameter and the Uu QoS Rule specifically includes two cases: the QoS flow establishment process is initiated by the Remote UE, and the QoS flow establishment process is initiated by the Relay UE SMF.

For the case where the QoS flow establishment process is initiated by the Remote UE,
The above-mentioned determining the Uu QoS parameter includes: receiving the first target QoS parameter from the Relay UE, where the first target QoS parameter is determined by the Relay UE; and determining the Uu QoS parameter according to the first target QoS parameter.

In the embodiment of the present disclosure, the Uu QoS parameter is determined by the Relay UE SMF according to the first target QoS parameter provided by the Relay UE, where the first target QoS parameter is determined by the Relay UE according to the PC5 QoS parameter received from the Remote UE.

The above-mentioned determining the Uu QoS Rule includes: receiving the first target packet filter from the Relay UE, where the first target packet filter is determined by the Relay UE; determining the Uu QoS Rule, according to the first target packet filter, where the Uu QoS Rule includes the QoS flow identifier (QFI) and the first target packet filter.

In the embodiment of the present disclosure, the Uu QoS Rule is specifically determined by the Relay UE SMF according to the first target packet filter provided by the Relay UE, where the first target packet filter is determined by the Relay UE according to the packet filter received from the Remote UE.

In some embodiments, the method further includes: transmitting a first target packet filter to a Relay UE user plane management function (User Plane Function, UPF), so that the Relay UE UPF maps the downlink IP packet to the corresponding QoS flow according to the first target packet filter. Specifically, the Relay UE SMF may transmit an N4 session request message to the Relay UE UPF, where the message includes the first target packet filter, and the UPF uses the first target packet filter to map the downlink IP packet to the corresponding QoS flow.

For the case where the QoS flow establishment process is initiated by the Relay UE SMF,
The above-mentioned determining the Uu QoS parameter includes: determining the Uu QoS parameter according to the mapping relationship between Differentiated Services Code Point (DSCP) and QoS parameter and the DSCP value in the downlink IP packet sent by N3IWF.

In the embodiment of the present disclosure, the Uu QoS parameter is specifically determined by the Relay UE SMF itself according to the mapping relationship between the DSCP and the QoS parameter and the DSCP value in the downlink IP packet transmitted by the N3IWF.

The above-mentioned determining the Uu QoS Rule includes: determining the Uu QoS Rule according to the QFI and the packet filter.

In the embodiment of the present disclosure, the Uu QoS Rule is specifically determined by the Relay UE SMF itself according to the QFI and packet filter, where the packet filter includes the N3IWF IP address and the SPI, or the packet filter includes the N3IWF IP address and DSCP.

In the embodiment of the present disclosure, the QoS flow establishment process is initiated by the Remote UE or the Relay UE SMF. After the Relay UE SMF determines the Uu QoS parameter and Uu QoS Rule, the determined Uu QoS parameter and the Uu QoS Rule are transmitted to the Relay UE, the PC5 QoS flow between the Remote UE and the Relay UE and the QoS flow between the Relay UE and the Relay UE UPF are established, so as to meet the QoS requirements of the QoS flow between the Remote UE and the Remote UE UPF.

Referring to FIG. 4, an embodiment of the present disclosure provides a QoS control method, which is applied to a Relay UE, where the method includes:
Step 401: receiving the PC5 QoS parameter and the packet filter from Remote UE, or receiving the Uu QoS parameter and the Uu QoS Rule from the Relay UE SMF;
Step 402: determining the target QoS parameter and the target packet filter according to the PC5 QoS parameter and the packet filter, or according to the Uu QoS parameter and the Uu QoS Rule.

In the embodiment of the present disclosure, two cases are specifically included: the QoS flow establishment process is initiated by the Remote UE, and the QoS flow establishment process is initiated by the Relay UE SMF.

For the Remote UE initiating a QoS flow establishment process, the method is as follows: receiving the PC5 QoS parameter and the packet filter from the Remote UE, and determining target QoS parameter and target packet filter according to the PC5 QoS parameter and packet filter.

In some embodiments, the receiving the PC5 QoS parameter and packet filter from the Remote UE specifically includes: receiving a first request message for establishing a new PC5 QoS flow from the Remote UE, where the first request message includes the PC5 QoS parameter and the packet filter. Optionally, the first request message may be called as a link modification request (Link Modification Request) message, where the PC5 QoS parameter and the packet filter are carried in the message. The packet filter includes the N3IWF IP address and the SPI.

In some embodiments, the above-mentioned target QoS parameter is Uu QoS parameter, and the determining the target QoS parameter according to the PC5 QoS parameter specifically includes: determining the target QoS parameter according to the PC5 QoS parameter and the mapping relationship between the PC5 QoS parameter and the Uu QoS parameter.

In some embodiments, the foregoing packet filter is a Uu packet filter, and determining the target packet filter according to the packet filter specifically includes: determining whether to accept the Uu packet filter according to the second QoS policy information.

Further, the method further includes: receiving the second QoS policy information from the PCF, where the second QoS policy information includes the allowed mapping relationship between the PC5 QoS parameter and the Uu QoS parameter, and the allowed N3IWF address, specifically, the Relay UE may receive the second QoS policy information from the PCF through the AMF.

Further, the method further includes: transmitting a PDU session request message to the Relay UE SMF, where the PDU session request message includes the target QoS parameter and the target packet filter.

In the embodiment of the present disclosure, the Remote UE initiates the QoS flow establishment process, and the Relay UE receives the PC5 QoS parameter and packet filter determined by the Remote UE, determines the target QoS parameter and the target packet filter according to the PC5 QoS parameter and packet filter, and establishes the PC5 QoS flow between the Remote UE and the Relay UE and the QoS flow between the Relay UE and the Relay UE UPF, so as to meet the QoS requirements of the QoS flow between the Remote UE and the Remote UE UPF.

For the Relay UE SMF initiating a QoS flow establishment process, the method is as follows: receiving Uu QoS parameter and the Uu QoS Rule from the Relay UE SMF, and determining the target QoS parameter and the target packet filter according to the Uu QoS parameter and the Uu QoS Rule.

In some embodiments, the receiving the Uu QoS parameter and the Uu QoS Rule from the Relay UE SMF specifically includes: receiving a PDU session request message from the Relay UE SMF, where the PDU session request message includes the Uu QoS parameter and the Uu QoS Rule. Uu QoS Rule includes QFI and packet filter, packet filter includes N3IWF IP address and SPI, or packet filter includes N3IWF IP address and DSCP.

In some embodiments, the above-mentioned target QoS parameter is PC5 QoS parameter, and the determining the target QoS parameter according to the Uu QoS parameter specifically includes: determining the target QoS parameter according to the Uu QoS parameter and the mapping relationship between the Uu QoS parameter and the PC5 QoS parameter.

In some embodiments, the above-mentioned target packet filter is a PC5 packet filter, and the determining the target packet filter according to the Uu QoS Rule specifically includes: determining the target packet filter according to the packet filter in the Uu QoS Rule.

Further, the method further includes: mapping the downlink data packet to the PC5 QoS flow according to the target packet filter.

Further, the method further includes: transmitting a link modification request message to the Remote UE, where the link modification request message includes the target QoS parameter and the target packet filter.

In the embodiment of the present disclosure, the Relay UE SMF initiates the QoS flow establishment process, the Relay UE receives the Uu QoS parameter and the Uu QoS Rule determined by the Relay UE SMF, and determines the target QoS parameter and the target packet filter according to the Uu QoS parameter and the Uu QoS Rule, and establishes the PC5 QoS flow between the Remote UE and the Relay UE and the QoS flow between the Relay UE and the Relay UE UPF, so as to meet the QoS requirements of the QoS flow between the Remote UE and the Remote UE UPF.

The method of the embodiment of the present disclosure is described below in conjunction with the drawings:

### Embodiment 1: QoS flow establishment process initiated by Remote UE;

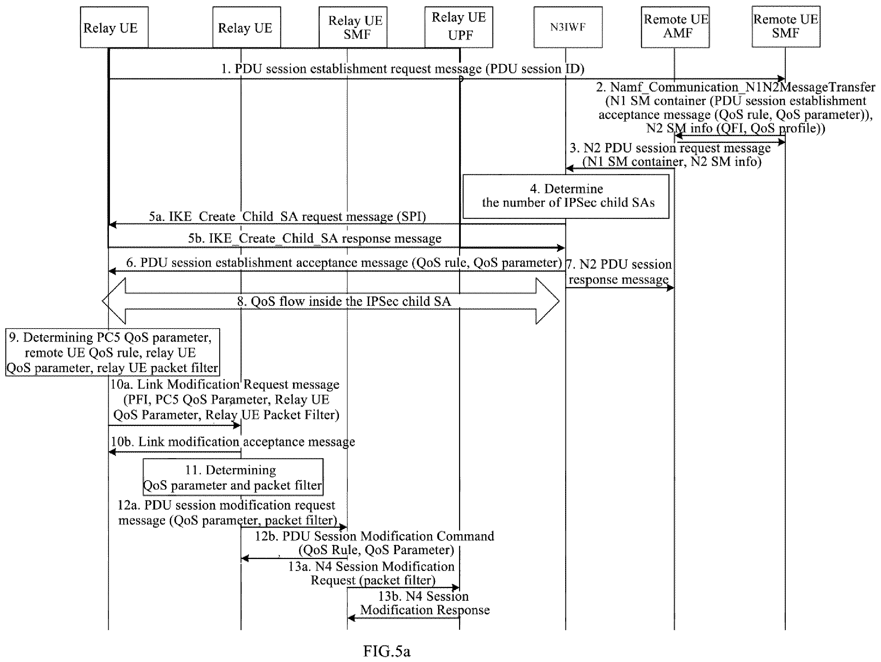

Referring to FIG. 5a, steps 1-8 describe how the Remote UE connects and establishes a QoS flow with the Remote UE UPF through an IPSec, and how the Remote UE acquires the QoS parameter and N3WIF address information, and steps 9-13 describe how the Remote UE establishes/updates the PC5 QoS flow and how to request Relay UE to establish/update QoS flow.
1. The Remote UE initials a PDU session establishment request message to the Remote UE SMF, where the request message includes information such as the PDU session ID.
2. The Remote UE SMF determines the QoS parameter, including 5QI, GFBR, etc. The Remote UE SMF transmits a N1N2 message transmission message to the Remote UE AMF, where the message includes N2 SM info and N1 SM container. N2 SM info contains QFI and QoS parameters, where QFI is the QoS flow identifier, which is used for uniquely identifying the QoS flow. The N1 SM container contains the PDU session establishment acceptance message, and the PDU session establishment acceptance message contains the QoS parameter and the QoS Rule, where the QoS Rule also includes QFI and packet filter, and packet filter is used for binding the Packet to the QFI. N2 SM info is sent to N3IWF, and N1 SM container is sent to UE.
3. The Remote UE AMF transmits a PDU session request message to the N3IWF, where the message contains N2 SM info and N1SM container.
4. The N3IWF is determined to establish a corresponding IPSec Child SA for each QoS flow between the Remote UE and the Remote UE UPF.
5. The N3IWF transmits an IKE_Create_Child_SA request message to the Remote UE to establish the IPSec Child SA between the N3IWF and the Remote UE, where the request message contains the identifier SPI (Security Parameter Index) of the IPSec Child SA. The Remote UE returns a response message to the N3IWF.
6. The N3IWF transmits the PDU session establishment acceptance message to the Remote UE, where the message includes the QoS parameter and the QoS Rule.
7. The N3IWF transmits the PDU session response message to the Remote UE AMF.
8. The QoS flow established between the Remote UE and the Remote UE UPF is transmitted through the IPSec child SA between the Remote UE and the N3IWF.
9. The Remote UE determines the PC5 QoS parameter, the Remote UE PC5 QoS Rule, the Relay UE QoS parameter, and the Relay UE packet filter. The Remote UE determines the PC5 QoS parameter according to the QoS parameter acquired in step 6 and the mapping relationship between the Uu QoS parameter and the PC5 QoS parameter, for example, determines the PQI through the mapping relationship between the 5QI and the PQI. The Remote UE PC5 QoS Rule includes PC5 packet filter and PFI, where PC5 packet filter contains N3IWF address and SPI, PFI is PC5 QoS flow identifier, the Remote UE maps the IP packet to PC5 QoS flow identified by PFI through PC5 packet filter. The Relay UE QoS parameter is the QoS parameter received in step 6. The Relay UE packet filter consists of N3IWF IP address and SPI, the Relay UE packet filter needs to be transmitted to the network by the Relay UE for mapping the downlink IP packet to the corresponding QoS flow.
10a. The Remote UE transmits a Link Modification Request message to the Relay UE for establishing a new PC5 QoS, where the message includes PFI, PC5 QoS parameter, Relay UE QoS parameter and Relay UE packet filter.
10b. The Relay UE returns a Link Modification Acceptance message to the Remote UE.
11. The Relay UE determines the QoS parameter and the packet filter according to the Relay UE QoS parameter and the Relay UE packet filter transmitted by the Remote UE. The Relay UE determines whether to accept the Relay UE QoS parameter and the Relay UE packet filter requested by the Remote UE according to the policy information, and may also update the Relay UE QoS parameter according to the policy information. The Relay UE policy information includes allowed Relay UE QoS parameter and allowed N3IWF address information.
12a. The Relay UE transmits a PDU session modification request message to the Relay UE SMF for establishing a new QoS flow, where the message includes the QoS parameter and packet filter determined in step 11.
12b. The Relay UE SMF returns a PDU session modification confirmation message to the Relay UE, where the message includes the QoS parameter and QoS Rule accepted by the SMF, and the QoS Rule includes QFI and packet filter. The Relay UE maps the uplink IP packet to the corresponding QoS flow through the QoS Rule.
13a. The Relay UE SMF transmits an N4 session request message to the Relay UE UPF, where the message includes a packet filter, and the UPF uses the packet filter to map the downlink IP packet to the corresponding QoS flow.
13b. The Relay UE UPF returns the N4 session response message to the Relay UE SMF.

### Embodiment 2: QoS flow establishment process initiated by Relay UE SMF;

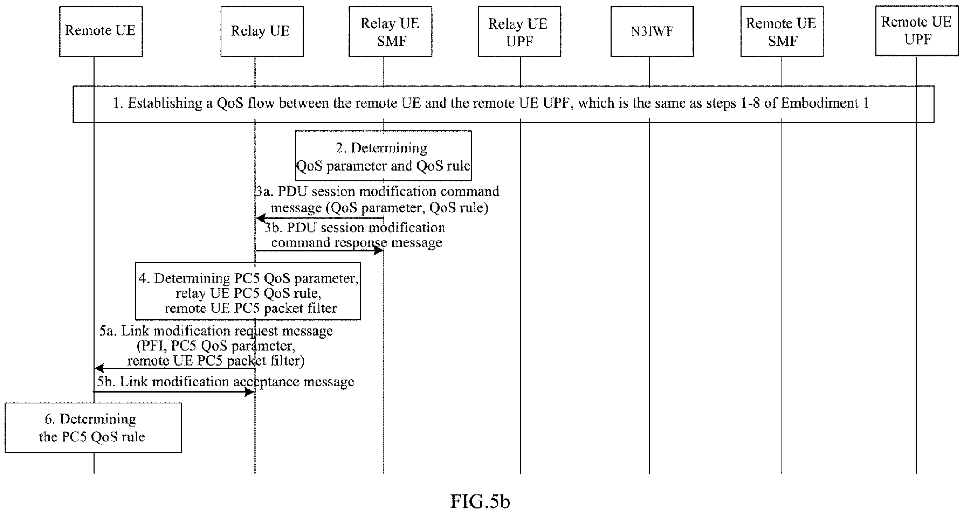

Referred to FIG. 5b, where step 1 is the same as steps 1-8 in FIG. 5a.
1. A QoS flow is established between the Remote UE and the Remote UE UPF, which is the same as steps 1-8 in Embodiment 1.
2. The Relay UE SMF decides to initiate the QoS flow establishment process, and the Relay UE SMF determines the QoS parameter and QoS Rule. Relay UE SMF determines QoS parameter according to the mapping relationship between DSCP and QoS parameter and the DSCP value in the downlink IP packet sent by N3IWF. QoS Rule consists of QFI and packet filter, QFI is assigned by SMF, and packet filter contains N3IWF IP address and SPI (or DSCP).
3a. The Relay UE SMF initiates the QoS flow establishment process, and the Relay UE SMF transmits a PDU session modification command message to the Relay UE, where the message includes QoS parameter and QoS Rule.
3b. The Relay UE returns a PDU session modification command response message to the Relay UE SMF.
4. The Relay UE determines the PC5 QoS parameter, the Relay UE PC5 QoS Rule, and the Remote UE PC5 packet filter. The Relay UE determines the PC5 QoS parameter according to the QoS parameter acquired in step 3a and the mapping relationship between the Uu QoS parameter and the PC5 QoS parameter, for example, determines the PQI through the mapping relationship between the 5QI and the PQI. The Relay UE PC5 QoS Rule includes PC5 packet filter and PFI, where PC5 packet filter contains N3IWF address and SPI (or DSCP), PFI is PC5 QoS flow identifier, and Relay UE maps the downlink IP packet to PC5 QoS flow identified by PFI through PC5 packet filter. The Remote UE PC5 packet filter contains N3IWF IP address and SPI (or DSCP).
5a. The Relay UE transmits a Link Modification Request message to the Remote UE, where the message includes PFI, PC5 QoS parameter and Remote UE PC5 packet filter.
5b. The Remote UE returns the Link Modification Acceptance message to the Relay UE.
6. The Remote UE generates the PC5 QoS Rule according to the PFI and the Remote UE PC5 packet filter, and the Remote UE maps the uplink IP packet to the corresponding PC5 QoS flow through the PC5 packet filter.

### Embodiment 3: PCF provides QoS policy information to UE;

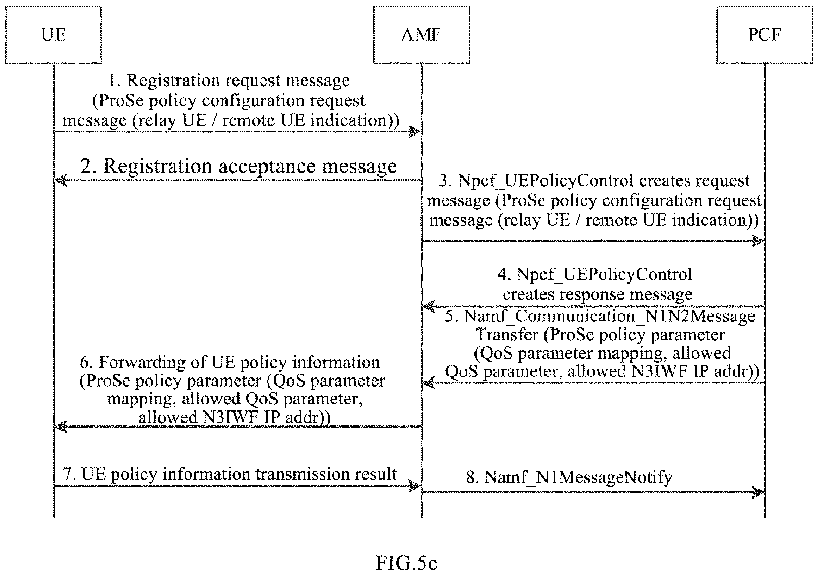

Referring to FIG. 5c, FIG. 5c shows a process of PCF providing QoS policy information to Remote UE or Relay UE. Steps 9 and 11 in the above-mentioned Embodiment 1, and step 4 in the above-mentioned Embodiment 2 relate to this process.
1. The UE (Remote UE or Relay UE) transmits a Registration Request message to the AMF, where the message contains a ProSe Policy Provisioning Request message, which is used for indicating to the PCF to request the provision of ProSe policy information. The UE also indicates to the PCF whether it is a Remote UE or a Relay UE.
2. After completing the Registration process, the AMF returns a Registration Acceptance message to the UE.
3. The AMF transmits a request message to the PCF, and forwards the ProSe policy request indication information and the Remote UE/Relay UE indication information to the PCF.
4. The PCF returns the response message to the AMF.
5. The PCF transmits a transmission message to the AMF, where the message includes a ProSe Policy parameter message for providing QoS policy information to the UE. For the Remote UE, the QoS policy information includes the mapping relationship between the Uu QoS parameter and the PC5 QoS parameter, such as the mapping relationship between 5QI and PQI. For Relay UE, the QoS policy information includes the mapping relationship between the Uu QoS parameter and the PC5 QoS parameter, such as the mapping relationship between 5QI and PQI, and also includes the allowed Relay UE QoS parameter and allowed N3IWF address information.
6. The AMF forwards the QoS policy information in step 5 to the Remote UE or Relay UE through the NAS message.
7. The UE returns a QoS policy information delivery result to the AMF.
8. The AMF returns a QoS policy information distribution result message to the PCF.

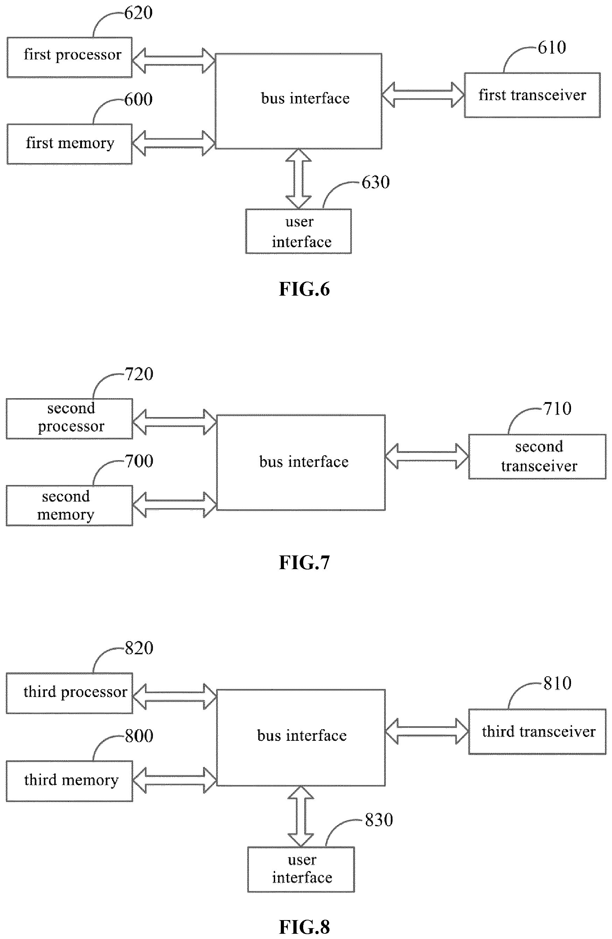

Referring to FIG. 6 , an embodiment of the present disclosure provides a QoS control apparatus, applied to a Remote UE, including: a first memory 600, a first transceiver 610, a first processor 620 and a user interface 630,
the first transceiver 610 is configured to receive and send data under the control of the first processor 620,
where in FIG. 6, the bus architecture may include any number of interconnected buses and bridges, specifically one or more processors represented by the first processor 620 and various circuits of the memory represented by the first memory 600 are linked together. The bus architecture can also link together various other circuits such as peripherals, voltage regulators, and power management circuits, etc., which are well known in the art and therefore will not be further described herein. The bus interface provides the interface. The first transceiver 610 may be a plurality of elements, including a transmitter and a receiver, providing units for communicating with various other apparatuses over transmission media, these transmission media include wireless channels, wired channels, and optical cable and other transmission media. For different user devices, the user interface 630 may also be an interface capable of connecting externally and internally to required device, and the connected device includes but not limited to a keypad, a display, a speaker, a microphone, a joystick, and the like.

The first processor 620 is responsible for managing the bus architecture and general processing, and the first memory 600 can store data used by the processor 600 when performing operations.

Optionally, the first processor 620 may be a CPU (central processor), ASIC (Application Specific Integrated Circuit, application specific integrated circuit), FPGA (Field-Programmable Gate Array, Field-Programmable Gate Array) or CPLD (Complex Programmable Logic Device, complex programmable logic device), the first processor 620 may also be a multi-core architecture.

Specifically, the first processor 620 is used for reading the program in the first memory and performing the following operations of:
determining PC5 QoS parameter and packet filter;
transmitting the PC5 QoS parameter and the packet filter to the Relay UE.

In some embodiments, the first processor 620 is specifically used for:
transmitting a first request message for establishing a new PC5 QoS flow to the Relay UE, where the first request message includes the PC5 QoS parameter and the packet filter.

In some embodiments, the first processor 620 is specifically used for:
determining the PC5 QoS parameter according to the QoS parameter received from the N3IWF and the mapping relationship between the Uu QoS parameter and the PC5 QoS parameter.

In some embodiments, the first processor 620 is further used for:
receiving first QoS policy information from the PCF, where the first QoS policy information includes the mapping relationship between the Uu QoS parameter and the PC5 QoS parameter.

In some embodiments, the packet filter includes an N3IWF IP address and an SPI, and the SPI is acquired by the Relay UE from the N3IWF.

In some embodiments, the first processor 620 is further used for:
mapping the uplink data packet to the PC5 QoS flow according to the packet filter.

Referring to FIG. 7 , an embodiment of the present disclosure provides a QoS control apparatus, applied to a Relay UE SMF, including: a second memory 700, a second transceiver 710, and a second processor 720,
the second transceiver 710 is used for receiving and sending data under the control of the second processor 720,
where in FIG. 7, the bus architecture may include any number of interconnected buses and bridges, specifically one or more processors represented by the second processor 720 and various circuits of the memory represented by the second memory 700 are linked together. The bus architecture can also link together various other circuits such as peripherals, voltage regulators, and power management circuits, etc., which are well known in the art and therefore will not be further described herein. The bus interface provides the interface. The second transceiver 710 may be a plurality of elements, including a transmitter and a receiver, providing a unit for communicating with various other apparatuses over transmission media, these transmission media includes wireless channels, wired channels, optical cables, and other transmission media. The second processor 720 is responsible for managing the bus architecture and general processing, and the second memory 700 can store data used by the second processor 720 when performing operations.

The second processor 720 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor may also be a multi-core architecture.

Specifically, the second processor 720 is used for reading the program in the second memory and performing the following operations of:
determining Uu QoS parameter and Uu QoS Rule;
transmitting the Uu QoS parameter and Uu QoS Rule to the Relay UE.

In some embodiments, the second processor 720 is specifically used for:
transmitting a PDU session request message to the Relay UE, where the PDU session request message includes the Uu QoS parameter and the Uu QoS Rule.

In some embodiments, the second processor 720 is specifically used for:
receiving a first target QoS parameter from the Relay UE, where the first target QoS parameter is determined by the Relay UE;
determining the Uu QoS parameter according to the first target QoS parameter.

In some embodiments, the second processor 720 is specifically used for:
receiving a first target packet filter from the Relay UE, where the first target packet filter is determined by the Relay UE;
determining the Uu QoS Rule according to the first target packet filter, where the Uu QoS Rule includes QFI and the first target packet filter.

In some embodiments, the second processor 720 is specifically used for:
determining the Uu QoS parameter according to the mapping relationship between DSCP and QoS parameter and the DSCP value in the downlink IP packet transmitted by the N3IWF.

In some embodiments, the second processor 720 is specifically used for:
determining the Uu QoS Rule according to the QFI and packet filter, where the packet filter includes the N3IWF IP address and SPI, or the packet filter includes the N3IWF IP address and DSCP.

In some embodiments, the second processor 720 is further used for:
transmitting the first target packet filter to the Relay UE UPF, so that the Relay UE UPF maps the downlink IP packet to a corresponding QoS flow according to the first target packet filter.

Referring to FIG. 8, an embodiment of the present disclosure provides a QoS control apparatus, applied to a Relay UE, including: a third memory 800, a third transceiver 810, a third processor 820, and a user interface 830:
the third transceiver 810 is used for receiving and sending data under the control of the third processor 820 .
where in FIG. 8, the bus architecture may include any number of interconnected buses and bridges, specifically one or more processors represented by the third processor 820 and various circuits of the memory represented by the third memory 800 are linked together. The bus architecture can also link together various other circuits such as peripherals, voltage regulators, and power management circuits, etc., which are well known in the art and therefore will not be further described herein. The bus interface provides the interface. The third transceiver 810 may be a plurality of elements, including a transmitter and a receiver, providing units for communicating with various other apparatuses over transmission media, these transmission media includes wireless channels, wired channels, optical cables, and other transmission media. For different user devices, the user interface 830 may also be an interface capable of connecting externally and internally to required device, and the connected device includes but not limited to a keypad, a display, a speaker, a microphone, a joystick, and the like.

The third processor 820 is responsible for managing the bus architecture and general processing, and the third memory 600 can store data used by the processor 600 when performing operations.

Optionally, the third processor 820 may be a CPU (Central Processor), ASIC (Application Specific Integrated Circuit, Application Specific Integrated Circuit), FPGA (Field-Programmable Gate Array, Field-Programmable Gate Array) or CPLD (Complex Programmable Logic Device, complex programmable logic device), the third processor 820 may also be a multi-core architecture.

Specifically, the third processor 820 is used for reading the program in the third memory and performing the following operations of:
receiving PC5 QoS parameter and packet filter from Remote UE, or receiving Uu QoS parameter and Uu QoS Rule from Relay UE SMF;
determining the target QoS parameter and the target packet filter according to the PC5 QoS parameter and the packet filter, or according to the Uu QoS parameter and the Uu QoS Rule.

In some embodiments, the third processor 820 is specifically used for:
receiving a first request message for establishing a new PC5 QoS flow from the Remote UE, where the first request message includes the PC5 QoS parameter and the packet filter.

In some embodiments, the packet filter includes N3IWF IP address and SPI.

In some embodiments, the target QoS parameter is the Uu QoS parameter;
the third processor 820 is specifically used for:
determining the target QoS parameter according to the PC5 QoS parameter and the mapping relationship between the PC5 QoS parameter and the Uu QoS parameter.

In some embodiments, the packet filter is Uu packet filter;
The third processor 820 is specifically used for:
determining whether to accept the Uu packet filter according to the second QoS policy information.

In some embodiments, the third processor 820 is further used for:
receiving the second QoS policy information from the PCF, where the second QoS policy information includes the allowed mapping relationship between the PC5 QoS parameter and the Uu QoS parameter, and the allowed N3IWF address.

In some embodiments, the third processor 820 is further used for:
transmitting a PDU session request message to the Relay UE SMF, where the PDU session request message includes the target QoS parameter and the target packet filter.

In some embodiments, the third processor 820 is specifically used for:
receiving a PDU session request message from the Relay UE SMF, where the PDU session request message includes the Uu QoS parameter and the Uu QoS Rule.

In some embodiments, the Uu QoS Rule includes QFI and packet filter, and the packet filter includes N3IWF IP address and SPI, or the packet filter includes N3IWF IP address and DSCP.

In some embodiments, the target QoS parameter is the PC5 QoS parameter;
the third processor 820 is specifically used for:
determining the target QoS parameter according to the Uu QoS parameter and the mapping relationship between the Uu QoS parameter and the PC5 QoS parameter.

In some embodiments, the target packet filter is PC5 packet filter;
the third processor 820 is specifically used for:
determining the target packet filter according to the packet filter in the Uu QoS Rule.

In some embodiments, the third processor 820 is further used for:
mapping the downlink data packet to the PC5 QoS flow according to the target packet filter.

In some embodiments, the third processor 820 is further used for:
transmitting a link modification request message to the Remote UE, where the link modification request message includes the target QoS parameter and the target packet filter.

An embodiment of the present disclosure provides a QoS control apparatus, applied to a Remote UE, including:
a first determining unit, configured to determine PC5 QoS parameter and packet filter (packet filter); and
a first transmitting unit, configured to transmit the PC5 QoS parameter and the packet filter to the Relay UE.

In some embodiments, the first transmitting unit is specifically configured to:
transmit a first request message for establishing a new PC5 QoS flow to the Relay UE, where the first request message includes the PC5 QoS parameter and the packet filter.

In some embodiments, the first determining unit is specifically configured to:
determine the PC5 QoS parameter according to the QoS parameter received from the N3IWF and the mapping relationship between the Uu QoS parameter and the PC5 QoS parameter.

In some embodiments, the apparatus also includes:
a second receiving unit, configured to receive first QoS policy information from the PCF, where the first QoS policy information includes a mapping relationship between the Uu QoS parameter and the PC5 QoS parameter.

In some embodiment, the packet filter includes an N3IWF IP address and an SPI, where the SPI is acquired by the Relay UE from the N3IWF.

In some embodiments, the apparatus also includes:
a first mapping unit, configured to map the uplink data packet to the PC5 QoS flow according to the packet filter.

An embodiment of the present disclosure provides a QoS control apparatus, applied to a Relay UE SMF, including:
a second determining unit, configured to determine Uu QoS parameter and Uu QoS Rule; and
a second transmitting unit, configured to transmit the Uu QoS parameter and Uu QoS Rule to the Relay UE.

In some embodiments, the second transmitting unit is specifically configured to:
transmit a PDU session request message to the Relay UE, where the PDU session request message includes the Uu QoS parameter and the Uu QoS Rule.

In some embodiments, the second determining unit is specifically configured to:
receive a first target QoS parameter from the Relay UE, where the first target QoS parameter is determined by the Relay UE;
determine the Uu QoS parameter according to the first target QoS parameter.

In some embodiments, the second determining unit is specifically configured to:
receive a first target packet filter from the Relay UE, where the first target packet filter is determined by the Relay UE;
determine the Uu QoS Rule according to the first target packet filter, where the Uu QoS Rule includes QFI and the first target packet filter.

In some embodiments, the second determining unit is specifically configured to:
determine the Uu QoS parameter according to the mapping relationship between DSCP and QoS parameter and the DSCP value in the downlink IP packet transmitted by the N3IWF.

In some embodiments, the second determining unit is specifically configured to:
determine the Uu QoS Rule according to the QFI and packet filter, where the packet filter includes the N3IWF IP address and SPI, or the packet filter includes the N3IWF IP address and DSCP.

In some embodiments, the apparatus also includes:
a third transmitting unit, configured to transmit the first target packet filter to the Relay UE UPF, so that the Relay UE UPF maps the downlink IP packet to a corresponding QoS flow according to the first target packet filter.

An embodiment of the present disclosure provides a QoS control apparatus, applied to a Relay UE, including:
a first receiving unit, configured to receive PC5 QoS parameter and packet filter from Remote UE, or receive Uu QoS parameter and Uu QoS Rule from Relay UE SMF; and
a third determining unit, configured to determine a target QoS parameter and a target packet filter according to the PC5 QoS parameter and the packet filter, or according to the Uu QoS parameter and the Uu QoS Rule.

In some embodiments, the first receiving unit is specifically configured to:
receive a first request message for establishing a new PC5 QoS flow from the Remote UE, where the first request message includes the PC5 QoS parameter and the packet filter.

In some embodiments, the packet filter includes N3IWF IP address and SPI.

In some embodiments, the target QoS parameter is the Uu QoS parameter;
the third determining unit is specifically configured to:
determine the target QoS parameter according to the PC5 QoS parameter and the mapping relationship between the PC5 QoS parameter and the Uu QoS parameter.

In some embodiments, the packet filter is Uu packet filter;
the third determining unit is specifically configured to:
determine whether to accept the Uu packet filter according to the second QoS policy information.

In some embodiments, the apparatus also includes:
a third receiving unit, configured to receive second QoS policy information from the PCF, where the second QoS policy information includes the allowed mapping relationship between the PC5 QoS parameter and Uu QoS parameter and allowed N3IWF address.

In some embodiments, the apparatus also includes:
a fourth transmitting unit, configured to transmit a PDU session request message to the Relay UE SMF, where the PDU session request message includes the target QoS parameter and the target packet filter.

In some embodiments, the first receiving unit is specifically configured to:
receive a PDU session request message from the Relay UE SMF, where the PDU session request message includes the Uu QoS parameter and the Uu QoS Rule.

In some embodiments, the Uu QoS Rule includes QFI and packet filter, where the packet filter includes N3IWF IP address and SPI, or the packet filter includes N3IWF IP address and DSCP.

In some embodiments, the target QoS parameter is the PC5 QoS parameter;
the third determining unit is specifically configured to:
determine the target QoS parameter according to the Uu QoS parameter and the mapping relationship between the Uu QoS parameter and the PC5 QoS parameter.

In some embodiments, the target packet filter is the PC5 packet filter;
the third determining unit is specifically configured to:
determine the target packet filter according to the packet filter in the Uu QoS Rule.

In some embodiments, the apparatus also includes:
a second mapping unit, configured to map the downlink data packet to the PC5 QoS flow according to the target packet filter.

In some embodiments, the apparatus also includes:
a fifth transmitting unit, configured to transmit a link modification request message to the Remote UE, where the link modification request message includes the target QoS parameter and the target packet filter. An embodiment of the present disclosure provides a QoS control apparatus, applied to a Relay UE SMF, including:
a second determining unit, configured to determine Uu QoS parameter and Uu QoS Rule;
a second transmitting unit, configured to transmit the Uu QoS parameter and Uu QoS Rule to the Relay UE.

In some embodiments, the second transmitting unit is specifically configured to:
transmit a PDU session request message to the Relay UE, where the PDU session request message includes the Uu QoS parameter and the Uu QoS Rule.

In some embodiments, the second determining unit is specifically configured to:
receive a first target QoS parameter from the Relay UE, where the first target QoS parameter is determined by the Relay UE; and
determine the Uu QoS parameter according to the first target QoS parameter.

In some embodiments, the second determining unit is specifically configured to:
receive a first target packet filter from the Relay UE, where the first target packet filter is determined by the Relay UE;
determine the Uu QoS Rule according to the first target packet filter, where the Uu QoS Rule includes QFI and the first target packet filter.

In some embodiments, the second determining unit is specifically configured to:
determine the Uu QoS parameter according to the mapping relationship between DSCP and QoS parameter and the DSCP value in the downlink IP packet transmitted by the N3IWF.

In some embodiments, the second determining unit is specifically configured to:
determine the Uu QoS Rule according to the QFI and packet filter, where the packet filter includes the N3IWF IP address and SPI, or the packet filter includes the N3IWF IP address and DSCP.

In some embodiments, the apparatus also includes:
a third transmitting unit, configured to transmit the first target packet filter to the Relay UE UPF.

An embodiment of the present disclosure provides a QoS control apparatus, which is applied to a Relay UE, and is characterized in that it includes:
a first receiving unit, configured to receive PC5 QoS parameter and packet filter from Remote UE, or receive Uu QoS parameter and Uu QoS Rule from Relay UE SMF; and
a third determining unit, configured to determine a target QoS parameter and a target packet filter according to the PC5 QoS parameter and the packet filter, or according to the Uu QoS parameter and the Uu QoS Rule.

In some embodiments, the first receiving unit is specifically configured to:
receive a first request message for establishing a new PC5 QoS flow from the Remote UE, where the first request message includes the PC5 QoS parameter and the packet filter.

In some embodiments, the packet filter includes N3IWF IP address and SPI.

In some embodiments, the target QoS parameter is Uu QoS parameter;
the third determining unit is specifically configured to:
determine the target QoS parameter according to the PC5 QoS parameter and the mapping relationship between the PC5 QoS parameter and the Uu QoS parameter.

In some embodiments, the packet filter is Uu packet filter;
the third determining unit is specifically configured to:
determine whether to accept the Uu packet filter according to the second QoS policy information.

In some embodiments, the apparatus also includes:
a third receiving unit, configured to receive second QoS policy information from the PCF, where the second QoS policy information includes the allowed mapping relationship between the PC5 QoS parameter and Uu QoS parameter and allowed N3IWF address.

In some embodiments, the apparatus also includes:
a fourth transmitting unit, configured to transmit a PDU session request message to the Relay UE SMF, where the PDU session request message includes the target QoS parameter and the target packet filter.

In some embodiments, the first receiving unit is specifically configured to:
receive a PDU session request message from the Relay UE SMF, where the PDU session request message includes the Uu QoS parameter and the Uu QoS Rule.

In some embodiments, the Uu QoS Rule includes QFI and packet filter, and the packet filter includes N3IWF IP address and SPI, or the packet filter includes N3IWF IP address and DSCP.

In some embodiments, the target QoS parameter is a PC5 QoS parameter;
the third determining unit is specifically configured to:
determine the target QoS parameter according to the Uu QoS parameter and the mapping relationship between the Uu QoS parameter and the PC5 QoS parameter.

In some embodiments, the target packet filter is PC5 packet filter;
the third determining unit is specifically configured to:
determine the target packet filter according to the packet filter in the Uu QoS Rule.

In some embodiments, the apparatus also includes:
a fifth transmitting unit, configured to transmit a link modification request message to the Remote UE, where the link modification request message includes the target QoS parameter and the target packet filter.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may also exist separately physically, or two or more units may be integrated into one unit. The above-mentioned integrated units can be implemented in the form of hardware or in the form of software functional unit.

If the integrated unit is implemented in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to enable a computer device (which may be a personal computer, a server, or a network device, etc.) or a processor (processor) to execute all or part of the steps of the methods described in various embodiments of the present disclosure. The aforementioned storage media include: U disk, mobile hard disk, read-only memory (Read-Only Memory, ROM), random access memory (Random Access Memory, RAM), magnetic disk or optical disk and other media that can store program codes.

The processor-readable storage medium may be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

Those skilled in the art should understand that the embodiments of the present disclosure may be provided as methods, systems, or computer program products. Accordingly, the present disclosure may be in the form of an entirely hardware embodiment, an entirely software embodiment, or an embodiment combining software and hardware aspects. Furthermore, the present disclosure may be in the form of a computer program product embodied on one or more computer-usable storage media (including but not limited to magnetic disk storage, optical storage, etc.) having computer-usable program code embodied therein.

The present disclosure is described with reference to flowcharts and/or block diagrams of methods, apparatus (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing device to generate a machine, such that instructions executed by a processor of a computer or other programmable data processing device generate an apparatus for implementing the functions specified in one or more procedures of the flowchart and/or one or more blocks of the block diagram.

These processor-executable instructions may also be stored in a processor-readable memory capable of directing a computer or other programmable data processing device to operate in a specific manner, such that the instructions stored in the processor-readable memory generate an article of manufacture comprising instruction apparatus, where the instruction apparatus implements the functions specified in one or more procedures of the flowchart and/or one or more blocks of the block diagram.

These processor-executable instructions can also be loaded onto a computer or other programmable data processing device, so that a series of operational steps are performed on the computer or other programmable device to produce a computer-implemented process, the instructions executed on the computer or other programmable devices thus provide steps for implementing the functions specified in one or more procedures of the flowchart and/or one or more blocks of the block diagram.

It should be noted that it should be understood that the division of the above modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, the determining module may be a separate processing element, or may be integrated in a chip of the above-mentioned apparatus. In addition, it may be stored in the memory of the above-mentioned apparatus in the form of program code, and a certain processing element of the above-mentioned apparatus may call and execute the functions of the modules identified above. The implementation of other modules is similar. In addition, all or part of these modules may be integrated together, and may also be implemented independently. The processing element mentioned here may be an integrated circuit with signal processing capabilities. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more application specific integrated circuits (Application Specific Integrated Circuit, ASIC), or, one or multiple microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (SOC).

The terms "first", "second" and the like in the specification and claims of the present disclosure are used to distinguish similar objects, and are not necessarily used to describe a specific order or sequence. It should be understood that the data so used may be interchanged under appropriate circumstances such that the embodiments of the present disclosure described herein are implemented, for example, in sequences other than those illustrated or described herein. Furthermore, the terms "including" and "having", as well as any variations thereof, are intended to cover a non-exclusive inclusion, for example, a process, method, system, product or device including a series of steps or units is not necessarily limited to those steps or units explicitly listed, but may include other steps or elements not explicitly listed or inherent to the process, method, product or apparatus. In addition, the use of "and/or" in the description and claims means at least one of the connected objects, such as A and/or B and/or C, which represents 7 situations including A alone, B alone, C alone, and both A and B, B and C, A and C, and A, B, and C. Similarly, the use of "at least one of A and B" in the present specification and claims should be understood as "A alone, B alone, or both A and B exist".

The embodiments of the present disclosure have been described above in conjunction with the drawings, but the present disclosure is not limited to the above-mentioned specific embodiments. The above-mentioned specific embodiments are only illustrative and not restrictive. Under the inspiration of the present disclosure, those ordinarily skilled in the art can also make many forms without departing from the purpose of the present disclosure and the scope of protection of the claims, all of which are within the protection of the present disclosure.

## Claims

1. A quality of service (QoS) control method, performed by a remote UE, the method comprising:
determining a PC5 interface quality of service (PC5 QoS) parameter and a packet filter; and
transmitting the PC5 QoS parameter and the packet filter to a relay UE.

2. The method according to claim 1, wherein the transmitting the PC5 QoS parameter and the packet filter to the Relay UE comprises:
transmitting a first request message for establishing a new PC5 QoS flow to the Relay UE, wherein the first request message comprises the PC5 QoS parameter and the packet filter.

3. The method according to claim 1, wherein the determining PC5 QoS parameter comprises:
determining the PC5 QoS parameter according to a QoS parameter received from Non-3GPP InterWorking Function (N3IWF) and a mapping relationship between a Uu interface quality of service (Uu QoS) parameter and the PC5 QoS parameter.

4. The method according to claim 3, further comprising:
receiving first QoS policy information from a policy control function (PCF), wherein the first QoS policy information comprises the mapping relationship between the Uu QoS parameter and the PC5 QoS parameter.

5. The method according to claim 1, wherein
the packet filter comprises a N3IWF IP address and a SPI, wherein the SPI is acquired by the Relay UE from the N3IWF.

6. The method according to claim 5, further comprising:
mapping, according to the packet filter, an uplink data packet to a PC5 QoS flow.

7. A QoS control method, performed by a relay UE session management function (SMF), the method comprising:
determining a Uu QoS parameter and a Uu QoS Rule; and
transmitting the Uu QoS parameter and the Uu QoS Rule to the Relay UE.

8. The method according to claim 7, wherein the transmitting the Uu QoS parameter and the Uu QoS Rule to the Relay UE comprises:
transmitting a protocol data unit (PDU) session request message to the Relay UE, wherein the PDU session request message comprises the Uu QoS parameter and the Uu QoS Rule.

9. The method according to claim 7, wherein the determining the Uu QoS parameter comprises:
receiving a first target QoS parameter from the Relay UE, wherein the first target QoS parameter is determined by the Relay UE;
determining the Uu QoS parameter according to the first target QoS parameter.

10. The method according to claim 7, wherein the determining the Uu QoS Rule comprises:
receiving a first target packet filter from the Relay UE, wherein the first target packet filter is determined by the Relay UE;
determining the Uu QoS Rule according to the first target packet filter, wherein the Uu QoS Rule comprises a QoS flow identifier (QFI) and the first target packet filter.

11. The method according to claim 7, wherein the determining the Uu QoS parameter comprises:
determining the Uu QoS parameter according to a mapping relationship between a Differentiated Services Code Point (DSCP) and a QoS parameter and a DSCP value in a downlink IP packet transmitted by Non-3GPP InterWorking Function (N3IWF).

12. The method according to claim 7, wherein the determining the Uu QoS Rule comprises:
determining the Uu QoS Rule according to a QFI and a packet filter, wherein the packet filter comprises a N3IWF IP address and a SPI, or the packet filter comprises the N3IWF IP address and the DSCP.

13. The method according to claim 10, further comprising:
transmitting the first target packet filter to a Relay UE user plane function (UPF), so that the Relay UE UPF maps a downlink IP packet to a corresponding QoS flow according to the first target packet filter.

14. A QoS control method, performed by a Relay UE, the method comprising:
receiving a PC5 QoS parameter and a packet filter from a Remote UE, or receiving a Uu QoS parameter and a Uu QoS Rule from a relay UE session management function (SMF); and
determining a target QoS parameter and a target packet filter according to the PC5 QoS parameter and the packet filter, or according to the Uu QoS parameter and the Uu QoS Rule.

15. The method according to claim 14, wherein the receiving the PC5 QoS parameter and the packet filter from the Remote UE comprises:
receiving a first request message for establishing a new PC5 QoS flow from the Remote UE, wherein the first request message comprises the PC5 QoS parameter and the packet filter.

16. The method according to claim 14, wherein
the packet filter comprises a N3IWF IP address and a SPI.

17. The method according to claim 14, wherein the target QoS parameter is a Uu QoS parameter;
the determining the target QoS parameter, according to the PC5 QoS parameter comprises:
determining the target QoS parameter according to the PC5 QoS parameter and a mapping relationship between the PC5 QoS parameter and the Uu QoS parameter.

18. The method according to claim 14, wherein the packet filter is a Uu packet filter;
the determining the target packet filter, according to the packet filter comprises:
determining whether to accept the Uu packet filter according to a second QoS policy information.

19. The method according to claim 17 or 18, further comprising:
receiving the second QoS policy information from a policy control function (PCF), wherein the second QoS policy information comprises the allowed mapping relationship between the PC5 QoS parameter and the Uu QoS parameter and an allowed N3IWF address.

20. The method according to claim 14, further comprising:
transmitting a PDU session request message to the Relay UE SMF, wherein the PDU session request message comprises the target QoS parameter and the target packet filter.

21. The method according to claim 14, wherein the receiving the Uu QoS parameter and the Uu QoS Rule from the Relay UE SMF comprises:
receiving a PDU session request message from the Relay UE SMF, wherein the PDU session request message comprises the Uu QoS parameter and the Uu QoS Rule.

22. The method according to claim 21, wherein the Uu QoS Rule comprises a QoS flow identifier (QFI) and the packet filter, the packet filter comprises a N3IWF IP address and a SPI, or the packet filter comprises the N3IWF IP address and a DSCP.

23. The method according to claim 14, wherein the target QoS parameter is the PC5 QoS parameter;
the determining the target QoS parameter, according to the Uu QoS parameter comprises:
determining the target QoS parameter, according to the Uu QoS parameter and the mapping relationship between the Uu QoS parameter and the PC5 QoS parameter.

24. The method according to claim 14, wherein the target packet filter is a PC5 packet filter;
the determining the target packet filter, according to the Uu QoS Rule comprises:
determining the target packet filter according to the packet filter in the Uu QoS Rule.

25. The method according to claim 24, further comprising:
mapping, according to the target packet filter, a downlink data packet to a PC5 QoS flow.

26. The method according to claim 14, further comprising:
transmitting a link modification request message to the Remote UE, wherein the link modification request message comprises the target QoS parameter and the target packet filter.

27. A QoS control apparatus, applied to a Remote UE, comprising: a first memory, a first transceiver, and a first processor,
wherein the first memory is used for storing program; the first transceiver is used for sending and receiving data under the control of the first processor; and the first processor is configured for reading the program in the first memory and performing the following operations of:
determining a PC5 QoS parameter and a packet filter;
transmitting the PC5 QoS parameter and the packet filter to a Relay UE.

28. The apparatus according to claim 27, wherein the first processor is configured for:
transmitting a first request message for establishing a new PC5 QoS flow to the Relay UE, wherein the first request message comprises the PC5 QoS parameter and the packet filter.

29. The apparatus according to claim 27, wherein the first processor is configured for:
determining the PC5 QoS parameter according to a QoS parameter received from Non-3GPP InterWorking Function (N3IWF) and a mapping relationship between a Uu interface quality of service (Uu QoS) parameter and the PC5 QoS parameter.

30. The apparatus according to claim 29, wherein the first processor is further configured for:
receiving first QoS policy information from a policy control function (PCF), wherein the first QoS policy information comprises the mapping relationship between the Uu QoS parameter and the PC5 QoS parameter.

31. The apparatus according to claim 27, wherein
the packet filter comprises a N3IWF IP address and a SPI, wherein the SPI is acquired by the Relay UE from the N3IWF.

32. The apparatus according to claim 31, wherein the first processor is further configured for:
mapping, according to the packet filter, an uplink data packet to a PC5 QoS flow.

33. A QoS control apparatus, applied to a relay UE session management function (SMF), comprising: a second memory, a second transceiver, and a second processor,
wherein the second memory is used for storing program; the second transceiver is used for sending and receiving data under the control of the second processor; the second processor is configured for reading the program in the second memory and performing the following operations of:
determining a Uu QoS parameter and a Uu QoS Rule; and
transmitting the Uu QoS parameter and the Uu QoS Rule to the Relay UE.

34. The apparatus according to claim 33, wherein the second processor is configured for:
transmitting a protocol data unit (PDU) session request message to the Relay UE, wherein the PDU session request message comprises the Uu QoS parameter and the Uu QoS Rule.

35. The apparatus according to claim 33, wherein the second processor is configured for:
receiving a first target QoS parameter from the Relay UE, wherein the first target QoS parameter is determined by the Relay UE;
determining the Uu QoS parameter according to the first target QoS parameter.

36. The apparatus according to claim 33, wherein the second processor is configured for:
receiving a first target packet filter from the Relay UE, wherein the first target packet filter is determined by the Relay UE; and
determining the Uu QoS Rule according to the first target packet filter, wherein the Uu QoS Rule comprises a QoS flow identifier (QFI) and the first target packet filter.

37. The apparatus according to claim 33, wherein the second processor is configured for:
determining the Uu QoS parameter according to a mapping relationship between a Differentiated Services Code Point (DSCP) and a QoS parameter and a DSCP value in a downlink IP packet transmitted by Non-3GPP InterWorking Function (N3IWF).

38. The apparatus according to claim 33, wherein the second processor is configured for:
determining the Uu QoS Rule according to a QFI and a packet filter, wherein the packet filter comprises a N3IWF IP address and a SPI, or the packet filter comprises the N3IWF IP address and the DSCP.

39. The apparatus according to claim 36, wherein the second processor is further configured for:
transmitting the first target packet filter to a Relay UE user plane function (UPF), so that the Relay UE UPF maps a downlink IP packet to a corresponding QoS flow according to the first target packet filter.

40. A QoS control apparatus, applied to a Relay UE, comprising: a third memory, a third transceiver, and a third processor,
wherein the third memory is used for storing program; the third transceiver is used for sending and receiving data under the control of the third processor; and the third processor is configured for reading the program in the third memory and performing the following operations of:
receiving a PC5 QoS parameter and a packet filter from a Remote UE, or receiving a Uu QoS parameter and a Uu QoS Rule from a relay UE session management function (SMF); and
determining a target QoS parameter and a target packet filter according to the PC5 QoS parameter and the packet filter, or according to the Uu QoS parameter and the Uu QoS Rule.

41. The apparatus according to claim 40, wherein the third processor is configured for:
receiving a first request message for establishing a new PC5 QoS flow from the Remote UE, wherein the first request message comprises the PC5 QoS parameter and the packet filter.

42. The apparatus according to claim 40, wherein
the packet filter comprises a N3IWF IP address and a SPI.

43. The apparatus according to claim 40, wherein the target QoS parameter is a Uu QoS parameter; and
the third processor is configured for:
determining the target QoS parameter according to the PC5 QoS parameter and a mapping relationship between the PC5 QoS parameter and the Uu QoS parameter.

44. The apparatus according to claim 40, wherein the packet filter is a Uu packet filter;
the third processor is configured for:
determining whether to accept the Uu packet filter according to a second QoS policy information.

45. The apparatus according to claim 43 or 44, wherein the third processor is further configured for:
receiving the second QoS policy information from a policy control function (PCF), wherein the second QoS policy information comprises the allowed mapping relationship between the PC5 QoS parameter and the Uu QoS parameter and an allowed N3IWF address.

46. The apparatus according to claim 40, wherein the third processor is further configured for:
transmitting a PDU session request message to the Relay UE SMF, wherein the PDU session request message comprises the target QoS parameter and the target packet filter.

47. The apparatus according to claim 40, wherein the third processor is configured for:
receiving a PDU session request message from the Relay UE SMF, wherein the PDU session request message comprises the Uu QoS parameter and the Uu QoS Rule.

48. The apparatus according to claim 47, wherein the Uu QoS Rule comprises a QoS flow identifier (QFI) and the packet filter, the packet filter comprises a N3IWF IP address and a SPI, or the packet filter comprises the N3IWF IP address and a DSCP.

49. The apparatus according to claim 40, wherein the target QoS parameter is the PC5 QoS parameter;
the third processor is configured for:
determining the target QoS parameter, according to the Uu QoS parameter and the mapping relationship between the Uu QoS parameter and the PC5 QoS parameter.

50. The apparatus according to claim 40, wherein the target packet filter is a PC5 packet filter;
the third processor is configured for:
determining the target packet filter according to the packet filter in the Uu QoS Rule.

51. The apparatus according to claim 50, wherein the third processor is further configured for:
mapping, according to the target packet filter, a downlink data packet to a PC5 QoS flow.

52. The apparatus according to claim 40, wherein the third processor is further configured for:
transmitting a link modification request message to the Remote UE, wherein the link modification request message comprises the target QoS parameter and the target packet filter.

53. A QoS control apparatus, applied to a Remote UE, comprising:
a first determining unit, configured to determine a PC5 QoS parameter and a packet filter (packet filter); and
a first transmitting unit, configured to transmit the PC5 QoS parameter and the packet filter to the Relay UE.

54. A QoS control apparatus, applied to a Relay UE SMF, comprising:
a second determining unit, configured to determine a Uu QoS parameter and a Uu QoS Rule; and
a second transmitting unit, configured to transmit the Uu QoS parameter and the Uu QoS Rule to the Relay UE.

55. A QoS control apparatus, applied to a Relay UE, comprising:
a first receiving unit, configured to receive a PC5 QoS parameter and a packet filter from a Remote UE, or receive a Uu QoS parameter and a Uu QoS Rule from a Relay UE SMF; and
a third determining unit, configured to determine a target QoS parameter and a target packet filter according to the PC5 QoS parameter and the packet filter, or according to the Uu QoS parameter and the Uu QoS Rule.

56. A processor-readable storage medium, wherein the processor-readable storage medium stores a program, and when the program is executed by a processor, the steps of the QoS control method according to any one of claims 1 to 6 are implemented, or, the steps of the QoS control method according to any one of claims 7 to 13 are implemented, or, the steps of the QoS control method according to any one of claims 14 to 26 are implemented.
